# EUROPEAN PATENT APPLICATION

(11) **EP 2 632 226 A1**
(43) Date of publication of application: **28.08.2013**
(21) Application number: 11834000.9
(22) Date of filing: 04.10.2011
(51) Int. Cl.: H04W 76/06

(54) **WIRELESS COMMUNICATION SYSTEM, METHOD FOR CONTROLLING SAME, BASE STATION, METHOD FOR CONTROLLING SAME, AND COMPUTER-READABLE MEDIUM**

(30) Priority: 21.10.2010 JP 2010236177
(71) Applicant: NEC Corporation, Tokyo 108-8001 (JP)
(72) Inventor: TSUTSUI, Takahiro, Tokyo 108-8001 (JP)
(74) Representative: MacDougall, Alan John Shaw
(86) International application number: PCT/JP2011/005607
(87) International publication number: WO 2012/053154

(57) **Abstract**

A radio communication system according to the present invention is a radio communication system including mobile stations and a base station which performs radio communication with the mobile stations, and includes:
identifier assignment means for assigning an identical group identifier to the plurality of mobile stations;
release instruction means for specifying the group identifier to instruct release of a radio connection; and
release means for performing processing of releasing the radio connection for the mobile stations having the group identifier specified by the release instruction means. Accordingly, it is possible to perform processing of releasing a radio connection for mobile stations while efficiently using radio resources.

## Description

### Technical Field

The present invention relates to a technique of radio communication performed between a base station and a mobile station.

### Background Art

Currently, examination of Long Term Evolution (LTE) has been promoted in standardization by the 3GPP (Non-patent literatures 1 to 3). A control function unit /user data transfer unit in LTE is defined as Mobility Management Entity (MME)/ Serving Gateway (S-GW). Further, an interface between a base station and the control function unit /user data transfer unit is defined as S1, an interface between base stations is defined as X2, and an interface between the base station and mobile stations is defined as Uu.

Further, Patent literature 1 discloses transmitting omnibus release messages by a PCH and a CCCH, and states that this can be executed in other architectures as well (e.g., LTE).

### Citation List

### Patent Literature

**Patent literature 1:** US Patent Application No. 09/852915 Non Patent Literature

**Non-patent literature 1:** E-UTRA and E-UTRAN; Overall description [3GPP TS 36.300 V9.4.0 (2010-6)]
**Non-patent literature 2:** E-UTRA RRC Protocol specification [3GGP TS 36.331 V9.3.0 (2010-06)]
**Non-patent literature 3:** E-UTRAN S1 Application Protocol [3GPP TS 36.413 V9.3.0 (2010-06)]

### Summary of Invention

### Technical Problem

However, in the related art described above, the base station needs to transmit, upon receiving a node reset from a core network, a connection release notification for radio connection control (Radio Resource Control (RRC) connection release) for the number of times corresponding to the number of target mobile stations. If there are a number of target mobile stations, the base station may not be able to efficiently use radio resources.

Further, according to Patent literature 1, it is impossible to check whether a mobile station could successfully receive the omnibus release message and a call is released after transmitting the omnibus release message based on the assumption that the mobile station could successfully receive the omnibus release message without fail. This may cause a situation in which the state on the side of the mobile station does not match the state on the side of an NW.

An exemplary object of the present invention is to provide a technique for solving the aforementioned problems.

### Solution to Problem

To accomplish the exemplary object stated above, a system according to the present invention is a radio communication system including mobile stations and a base station which performs radio communication with the mobile stations, and includes:
identifier assignment means for assigning an identical group identifier to the plurality of mobile stations;
release instruction means for specifying the group identifier to instruct release of a radio connection; and
release means for performing processing of releasing the radio connection for the mobile stations having the group identifier specified by the release instruction means.

To accomplish the exemplary object stated above, a method according to the present invention is a method of controlling a radio communication system including mobile stations and a base station which performs radio communication with the mobile stations, and includes the steps of:
assigning an identical group identifier to the plurality of mobile stations;
specifying the group identifier to instruct release of a radio connection; and
performing processing of releasing the radio connection in the mobile stations having the group identifier that is specified.

To accomplish the exemplary object stated above, an apparatus according to the present invention is a base station which performs radio communication with mobile stations, and includes:
identifier assignment means for assigning an identical group identifier to the plurality of mobile stations;
release instruction means for specifying the group identifier to instruct release of a radio connection; and
release means for performing processing of releasing the radio connection to the mobile stations having the group identifier specified by the release instruction means.

To accomplish the exemplary object stated above, a control method according to the present invention is a method of controlling a base station which performs radio communication with mobile stations, and includes the steps of:
assigning an identical group identifier to the plurality of mobile stations;
specifying the group identifier to instruct release of a radio connection; and
performing processing of releasing the radio connection to the mobile stations having the group identifier that is specified.

To accomplish the exemplary object stated above, a computer readable medium according to the present invention is a non-transitory computer readable medium storing a control program of a base station which performs radio communication with mobile stations, and the control program causes a computer to execute the steps of:
assigning an identical group identifier to the plurality of mobile stations;
specifying the group identifier to instruct release of a radio connection; and
performing processing of releasing the radio connection to the mobile stations having the group identifier that is specified.

### Advantageous Effects of Invention

According to the present invention, it is possible to perform processing of releasing a radio connection for mobile stations while efficiently using radio resources.

### Brief Description of Drawings

Fig. 1 is a block diagram showing a configuration of a radio communication system according to a first exemplary embodiment of the present invention;
Fig. 2 is a block diagram showing a configuration of a radio communication system according to a second exemplary embodiment of the present invention;
Fig. 3 is a block diagram showing a configuration of a mobile station according to the second exemplary embodiment of the present invention;
Fig. 4 is a block diagram showing a configuration of a base station according to the second exemplary embodiment of the present invention;
Fig. 5 is a block diagram showing a configuration of a mobile management apparatus according to the second exemplary embodiment of the present invention;
Fig. 6 is a sequence diagram describing an operation based on the radio communication system according to the second exemplary embodiment of the present invention;
Fig. 7 is a sequence diagram describing an operation based on the radio communication system according to the second exemplary embodiment of the present invention;
Fig. 8 is a sequence diagram describing an operation of the radio communication system according to the second exemplary embodiment of the present invention;
Fig. 9 is a diagram showing a mapping table of group IDs and IDs of mobile management apparatuses according to the second exemplary embodiment of the present invention;
Fig. 10 is a sequence diagram describing an operation of the radio communication system according to the second exemplary embodiment of the present invention; and
Fig. 11 is a sequence diagram describing an operation of a radio communication system as the premise of the present invention.

### Description of Embodiments

Hereinafter, with reference to the drawings, exemplary embodiments of the present invention will be described in detail as examples. It should be noted, however, that components described in the following exemplary embodiments are merely examples and the technical scope of the present invention is not limited to them.

### (First exemplary embodiment)

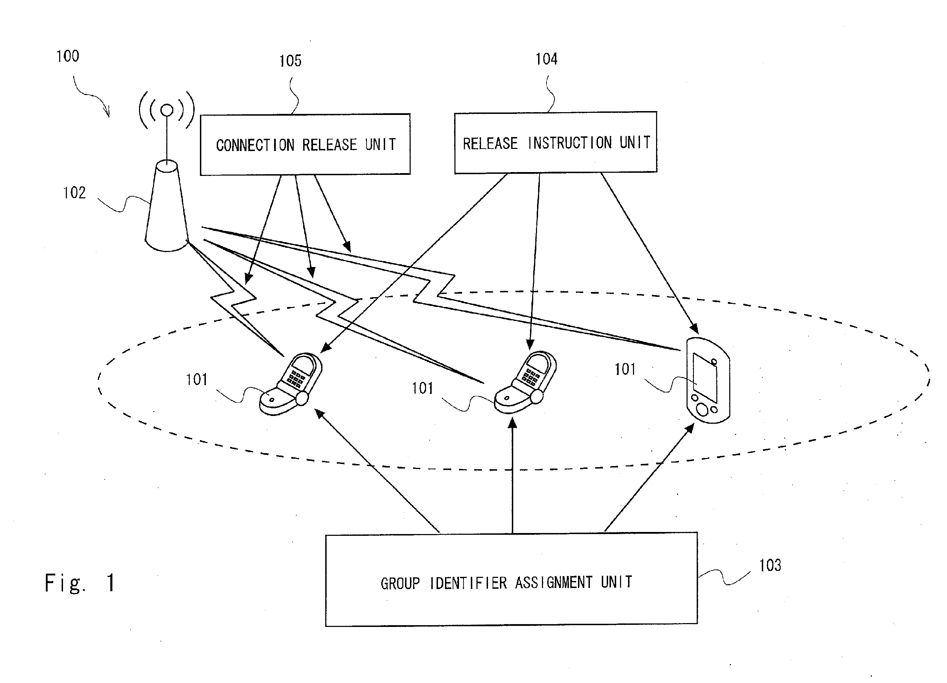

With reference to Fig. 1, a radio communication system 100 according to a first exemplary embodiment of the present invention will be described. As shown in Fig. 1, the radio communication system 100 includes mobile stations 101 and a base station 102 that performs radio communication with the mobile stations 101. The radio communication system 100 further includes a group identifier assignment unit 103, a release instruction unit 104, and a connection release unit 105. The group identifier assignment unit 103 assigns an identical group identifier to the plurality of mobile stations 101. Further, the release instruction unit 104 specifies the group identifier to instruct release of a radio connection. The connection release unit 105 performs processing of releasing the radio connection for the mobile stations 101 having the group identifier specified by the release instruction unit 104.

### (Second exemplary embodiment)

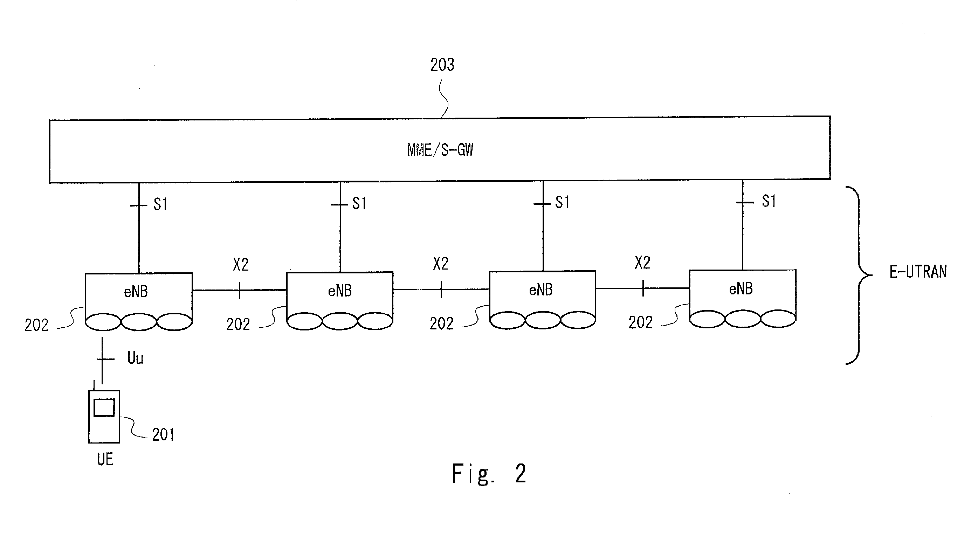

With reference to Figs. 2 to 10, a second exemplary embodiment of the present invention will be described in detail. This exemplary embodiment relates to a method of operating a radio access network, in which a plurality of radio connections are released using a single release message known as an omnibus release message. Seen from another aspect, this exemplary embodiment relates to a radio access network and a control node thereof. In the control node, the plurality of radio connections are released using the omnibus release message. A mobile terminal that acknowledges the omnibus release message transmitted from the radio access network releases the radio connection in response to the message. In the following exemplary embodiment, the omnibus release message is transmitted in a paging channel (PCH) or a common control channel (CCCH) in a CELL_FACH state.

In this exemplary embodiment, the specific detail such as a specific architecture, an interface, and a technique will be described. However, the present invention may be practiced in other exemplary embodiments that depart from these specific details. In the following description, functional blocks are illustrated in several drawings. These functions may be implemented using individual hardware circuits, or using software functions in conjunction with a suitably programmed digital microprocessor, or a general-purpose controller. Further, the functions may be implemented using an application specific integrated circuit (ASIC) or one or more digital signal processors (DSPs).

Fig. 2 is a block diagram showing a configuration of a system according to this exemplary embodiment. As shown in Fig. 2, this system includes a mobile station (UE) 201, base stations (eNBs) 202, and a mobile management apparatus (MME) 203.

### <Configurations>

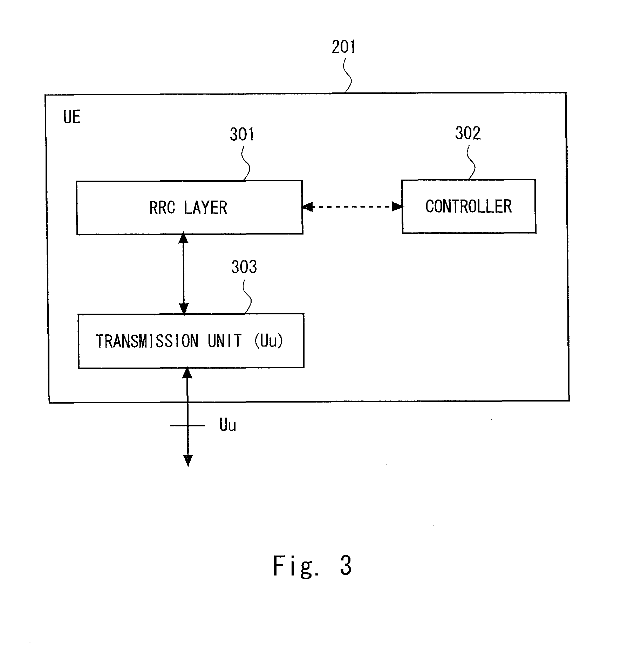

Figs. 3, 4, and 5 show the detail of configurations of nodes of the mobile station 201, the base station 202, and the mobile management apparatus 203.

Fig. 3 is a block diagram showing an internal configuration of the mobile station (UE) 201. As shown in Fig. 3, the mobile station 201 includes an RRC layer 301, a controller 302, and a transmission unit (Uu) 303. The RRC layer 301 shown in Fig. 3 implements decryption of RRC messages and processing of generating messages. The controller 302 receives a result of decrypting an RRC message from the RRC layer 301 to implement necessary processing, to instruct the RRC layer to generate a message. The transmission unit (Uu) 303 has a function of transmitting or receiving messages to or from a Uu interface.

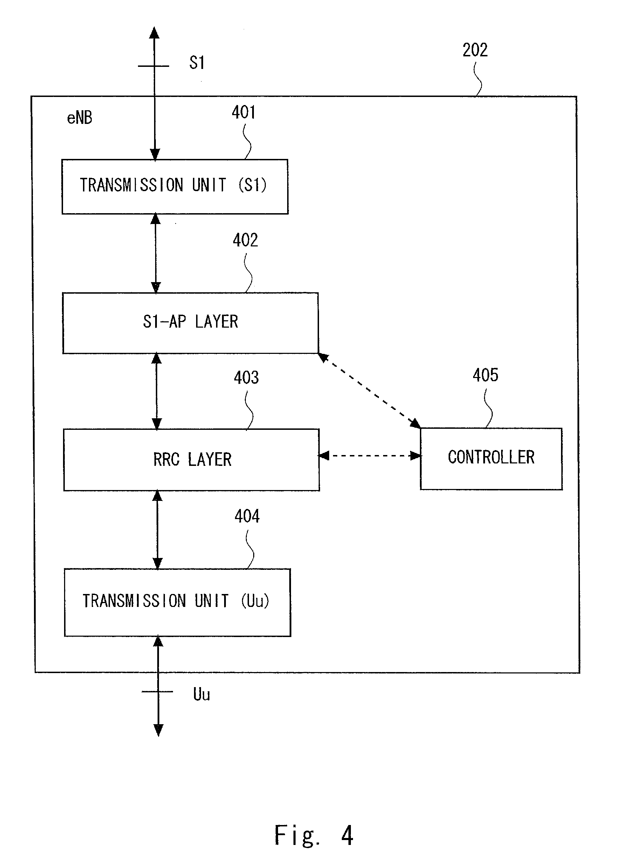

Fig. 4 is a block diagram showing an internal configuration of the base station (eNB) 202. As shown in Fig. 4, the base station 202 includes a transmission unit (S1) 401 and an S1-AP layer 402 that are connected to each other. Further, the base station 202 includes an RRC layer 403 and a transmission unit (Uu) 404 that are connected to each other. Further, the base station 202 includes a controller 405 for controlling the S1-AP layer 402 and the RRC layer 403.

The RRC layer 403 and the transmission unit (Uu) 404 shown in Fig. 4 have the similar functions to those of the RRC layer 301 and the transmission unit (Uu) 303 shown in Fig. 3. The S1-AP layer 402 implements decryption of S1-AP messages and processing of generating messages. The controller 405 receives a result of decrypting an RRC message or an S1-AP message from the RRC layer 403 or the S1-AP layer 402 to implement necessary processing, to instruct the RRC layer 403 or the S1-AP layer 402 to generate a message. The transmission unit (S1) 401 has a function of transmitting or receiving the messages to or from an S1 interface.

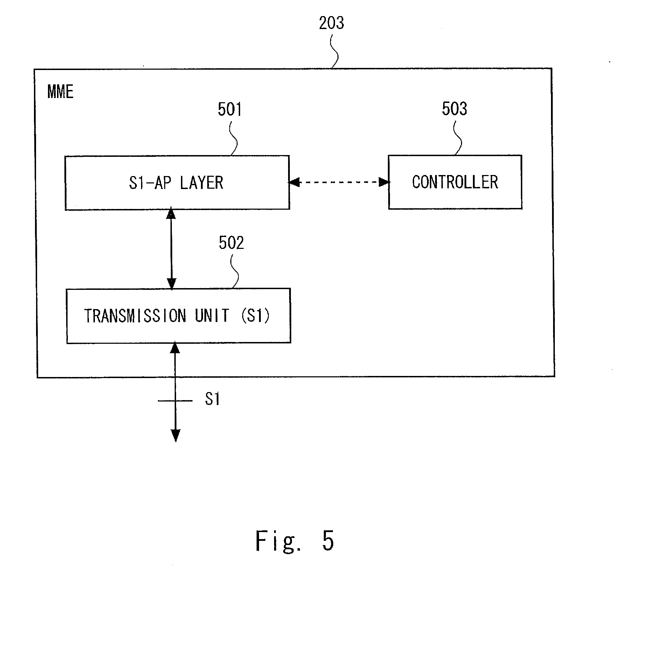

Fig. 5 is a block diagram showing an internal configuration of the mobile management apparatus (MME) 203. As shown in Fig. 4, the mobile management apparatus 203 includes an S1-AP layer 501, a transmission unit (S1) 502, and a controller 503. The S1-AP layer 501 and the transmission unit (S1) 502 shown in Fig. 5 have the similar functions to those of the S1-AP layer 402 and the transmission unit (S1) 401 shown in Fig. 4. The controller 503 implements necessary processing upon receiving the result of decrypting the S1-AP message from the S1-AP layer 501, to instruct the S1-AP layer 501 to generate a message.

### <Operations>

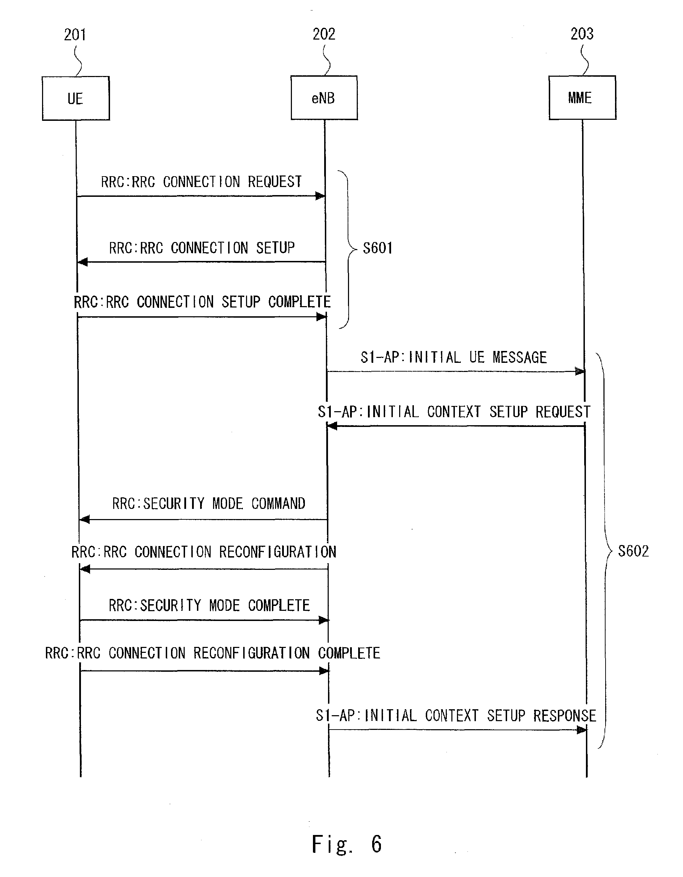

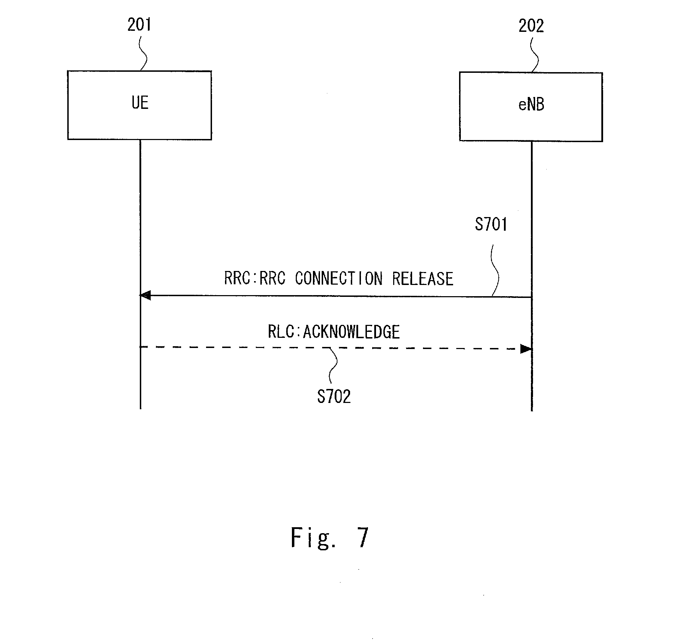

Figs. 6 and 7 are sequence diagrams describing operations on which the system is based.

First, at step S601 in Fig. 6, a connection is established between the mobile station 201 and the base station 202, and then at step S602, a connection (U-plane) is conducted between the mobile station 201 and the mobile management apparatus 203. After that, when the connection is released, as shown in step S701 of Fig. 7, the base station 202 notifies the mobile station 201 of a connection release instruction (RRC Connection Release), and the mobile station 201 sends back an acknowledgement notification (Acknowledge) to the base station 202 while performing the release processing.

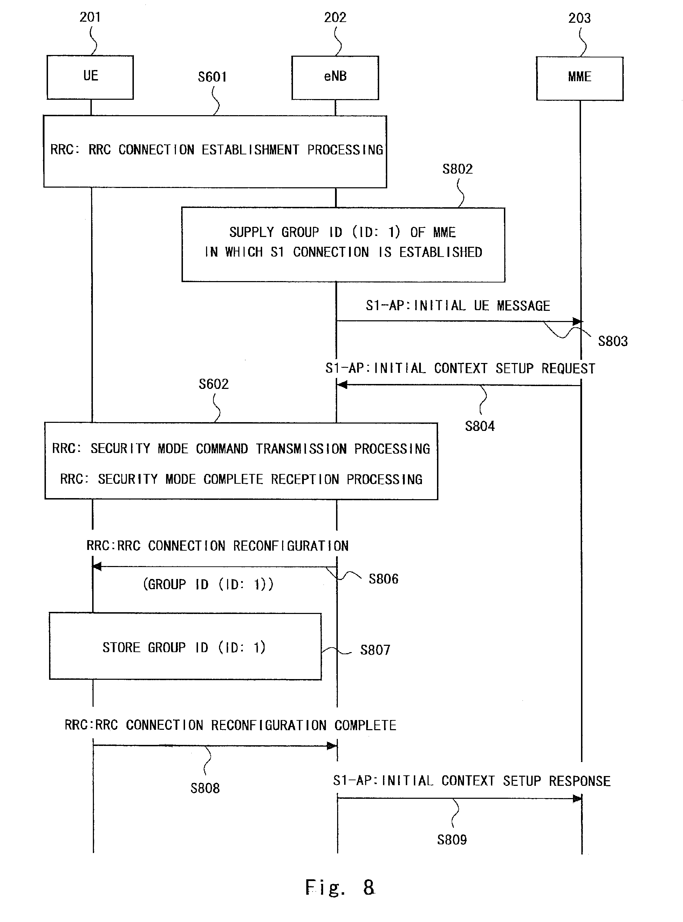

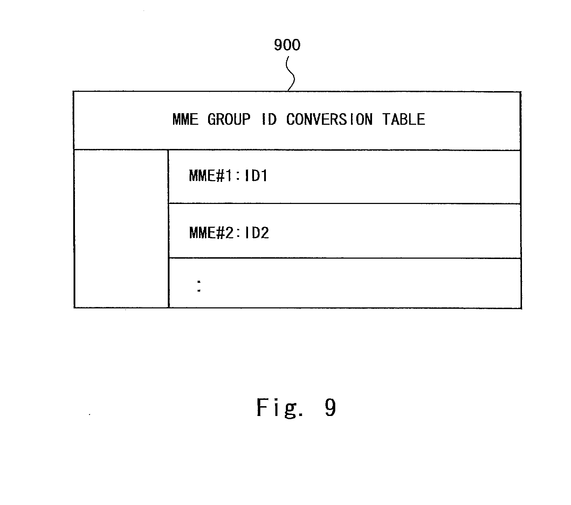

Fig. 8 is a sequence diagram describing an operation of this system. Fig. 8 shows a procedure for allocating a group ID (group identifier) of the mobile management apparatus 203 for establishing an S1 connection to the mobile station 201 when the base station establishes the S1 connection including E-RAB establishment with the mobile station. Fig. 9 is a diagram showing a mapping table of group IDs and IDs of the mobile management apparatuses 203.

At step S601, the base station 202 establishes an RRC connection with the mobile station 201 upon occurrence of call issuing or call reception, as described in Fig. 6.

Next, at step S802, when selecting the mobile management apparatus 203, the base station 202 supplies the group ID corresponding to the mobile management apparatus 203 that is selected based on a mapping table 900 shown in Fig. 9 and stores the group ID in the base station 202 as a part of mobile station information. After that, at step S803, the base station 202 transmits an initial mobile station message to the mobile management apparatus 203 that is selected, and the mobile management apparatus 203 notifies the base station 202 of an initial information setup request in response to the initial mobile station message.

Next, at step S602, the base station 202 executes RRC: security mode command transmission processing and RRC: security mode complete reception processing as described in Fig. 6.

At step S806, the base station notifies the mobile station of the group ID of the mobile management apparatus 203 by a message for radio resource control notified to the mobile station, e.g., RRC connection reconfiguration notification (Connection Reconfiguration).

Next, at step S807, the mobile station 201 stores the group ID of the mobile management apparatus 203 notified from the base station 202.

At step S808, the base station 202 receives an RRC connection reconfiguration complete notification (Connection Reconfiguration Complete) from the mobile station 201, and upon receiving the RRC connection reconfiguration complete notification, at step S809, further transmits an S1-AP: initial context setup response to the mobile management apparatus 203.

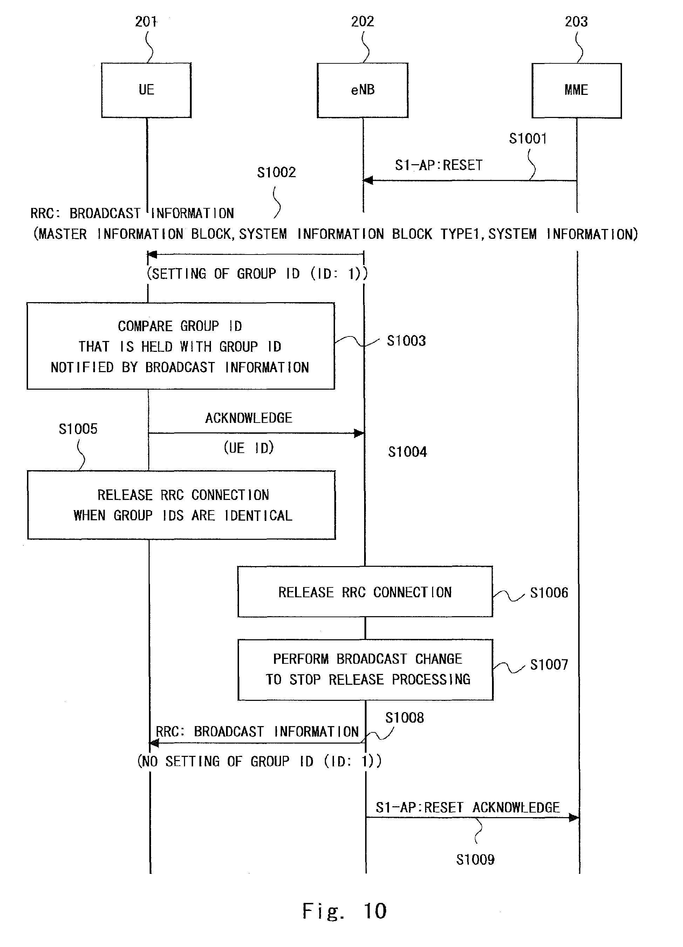

Fig. 10 shows a procedure for releasing the RRC connection by broadcast information when receiving the node reset from the mobile management apparatus 203 corresponding to the group ID: 1 of the mobile management apparatus 203.

At step S1001, the base station 202 receives the node reset from the mobile management apparatus 203 corresponding to the group ID: 1 of the mobile management apparatus 203. Then at step S1002, the base station 202 sets the group ID in which the RRC connection release is performed as the broadcast information and transmits the broadcast information.

Next, upon receiving the broadcast information, the mobile station 201 which is currently establishing the RRC connection compares, at step S1003, the group ID held by the mobile station 201 with the group ID notified by the broadcast information. When the two IDs are identical, at step S1004, the mobile station 201 transmits a notification (Acknowledge) including the mobile station ID to the base station 202. This notification can be implemented by a layer which is below the RRC.

Further, at step S1005, the mobile station 201 releases the RRC connection when the group ID held by the mobile station 201 matches the group ID notified by the broadcast information.

Meanwhile, upon receiving the notification (Acknowledge) including the mobile station ID, the base station 202 releases, at step S1006, the RRC connection of the mobile station 201 corresponding to the mobile station ID included in the notification (Acknowledge) that is received. When the base station 202 cannot obtain the notification (Acknowledge) including the mobile station ID from the mobile station 201 even after a predetermined period of time, the base station 202 transmits an RRC connection release notification to the mobile station 201 to release the RRC connection.

Next, at step S1007, the base station 202 changes broadcast information to one in which the setting of the group ID is deleted upon completion of the RRC connection release of all the mobile stations. Then the base station 202 transmits the broadcast information that is changed to the mobile station 201 at step S1008, and sends back an acknowledgement notification (Acknowledge) of the node reset to the mobile management apparatus 203 at step S1009.

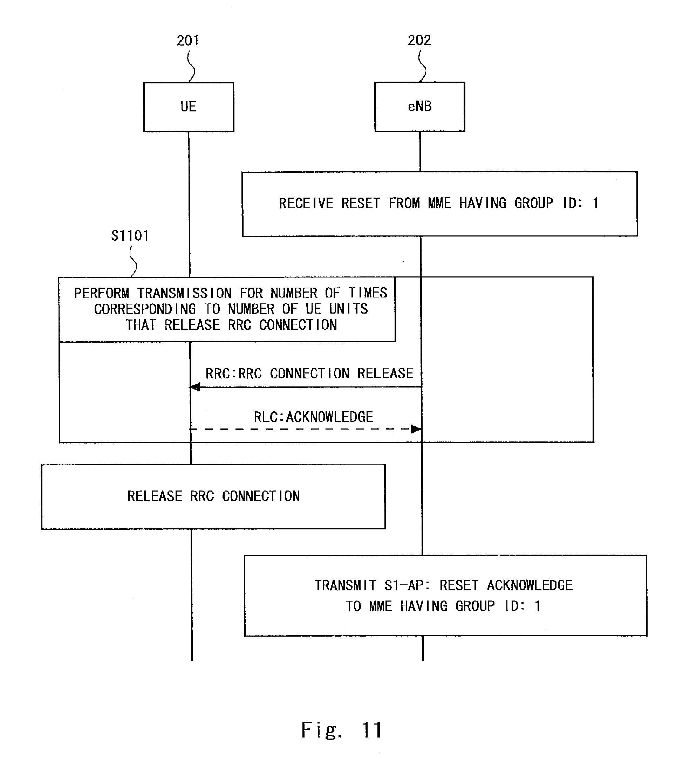

According to this exemplary embodiment, setting of the group ID in the broadcast information eliminates the need to transmit the RRC: RRC connection release notification. In a presupposed sequence (Fig. 11), at step S1101, the RRC: RRC connection release notification needs to be transmitted for the number of times corresponding to the mobile stations that release the RRC connection; however, at the same time, it is possible to save the communication resources. Further, since the broadcast information is the message for radio resource control constantly sent on the radio and it is sufficient that the size of the group ID is about 1 Byte, the ratio of occupying radio resources due to an increase in the size of the broadcast information is small. Thus it is possible to improve radio usage efficiency. Described in this exemplary embodiment is the processing for releasing the communication when the node reset request is received from the core network. However, the present invention is not limited to this case but may be applied to a case in which any event that needs release of a radio connection occurs.

### (Third exemplary embodiment)

Proposed in the second exemplary embodiment stated above with reference to Fig. 10 is the method of transmitting the notification (Acknowledge) from the mobile station 201. Meanwhile, in this exemplary embodiment, the notification (Acknowledge) is not transmitted from the mobile station 201. From step S1001 to step S1009 shown in Fig. 10, the mobile station 201 that could not receive the broadcast information may transmit the message for radio resource control to the base station 202. Even when the base station 202 receives the message for radio resource control, the base station 202 may not have received the broadcast information. Accordingly, the RRC connection is released by transmitting the RRC connection release notification to the mobile station as shown in step S701 in Fig. 7. When the base station 202 receives the message for radio resource control after step S1009, the base station 202 has not received the broadcast information. Thus, the mobile station information of the mobile station 201 corresponding to the group ID is stored in a memory in the base station 202 for a predetermined period of time. When the base station 202 receives the message for radio resource control to the mobile station 201, the RRC connection release is transmitted to the mobile station to release the RRC connection as shown in step S701 of Fig. 7. For example, a timer may monitor the state for a predetermined period of time. Then, after the predetermined period of time has elapsed, the broadcast information may be changed to the one in which the setting of the group ID is deleted, and the broadcast information may be transmitted.

According to this method, it is possible to perform radio connection release processing to the mobile station while efficiently using radio resources when the node reset is received from the core network.

Fig. 8 shows a procedure for allocating the group ID of the mobile management apparatus 203 to the mobile station 201 upon occurrence of call issuing or call reception. However, it may be possible that the mobile management apparatus 203 to which the S1 connection is made is changed upon occurrence of handover or reconnection. When the mobile management apparatus 203 is changed, the change of the group ID needs to be notified to the mobile station 201 by the message for radio resource control.

### (Other exemplary embodiments)

While the exemplary embodiments of the present invention have been described in detail, a system or an apparatus in which different features included in the exemplary embodiments are combined appropriately is also within the scope of the present invention.

Further, the present invention may be applied to a system including a plurality of apparatuses or may be applied to a single apparatus. Further, the present invention is also applicable to a case in which an information processing program that implements the functions of the exemplary embodiments is supplied to a system or an apparatus either directly or remotely. Therefore, a program installed in a computer in order to implement the functions of the present invention by the computer, or a medium storing the program, and a world wide web (WWW) server to allow download of the program are also within the scope of the present invention.

### [Other forms of exemplary embodiments]

A part or all of the exemplary embodiments stated above may be described as stated below in Supplementary notes. However, it is not limited to them.

### (Supplementary note 1)

A radio communication system comprising mobile stations and a base station which performs radio communication with the mobile stations, the radio communication system comprising:
identifier assignment means for assigning an identical group identifier to the plurality of mobile stations;
release instruction means for specifying the group identifier to instruct release of a radio connection; and
release means for performing processing of releasing the radio connection for the mobile stations having the group identifier specified by the release instruction means.

### (Supplementary note 2)

The radio communication system according to Supplementary note 1, wherein the identifier assignment means assigns the group identifier to the plurality of mobile stations every time an event that requires release of the radio connection occurs.

### (Supplementary note 3)

The radio communication system according to Supplementary note 1, wherein the identifier assignment means assigns the group identifier to the plurality of mobile stations when receiving a node reset from a core network.

### (Supplementary note 4)

The radio communication system according to any one of Supplementary notes 1 to 3, wherein the identifier assignment means notifies the mobile stations of the group identifier by a downlink message for radio resource control.

### (Supplementary note 5)

The radio communication system according to any one of Supplementary notes 1 to 4, wherein the release instruction means specifies the group identifier when releasing the radio connection for all the plurality of mobile stations identified by the group identifier.

### (Supplementary note 6)

The radio communication system according to any one of Supplementary notes 1 to 5, wherein the mobile stations having the group identifier specified by the release instruction means notify the base station of an identifier of the mobile stations.

### (Supplementary note 7)

The radio communication system according to Supplementary note 6, wherein the base station releases the radio connection for the mobile stations that have notified the identifier.

### (Supplementary note 8)

A method of controlling a radio communication system comprising mobile stations and a base station which performs radio communication with the mobile stations, the method comprising the steps of:
assigning an identical group identifier to the plurality of mobile stations;
specifying the group identifier to instruct release of a radio connection; and
performing processing of releasing the radio connection in the mobile stations having the group identifier that is specified.

### (Supplementary note 9)

A base station which performs radio communication with mobile stations, comprising:
identifier assignment means for assigning an identical group identifier to the plurality of mobile stations;
release instruction means for specifying the group identifier to instruct release of a radio connection; and
release means for performing processing of releasing the radio connection to the mobile stations having the group identifier specified by the release instruction means.

### (Supplementary note 10)

A method of controlling a base station which performs radio communication with mobile stations, the method comprising the steps of:
assigning an identical group identifier to the plurality of mobile stations;
specifying the group identifier to instruct release of a radio connection; and
performing processing of releasing the radio connection to the mobile stations having the group identifier that is specified.

### (Supplementary note 11)

A non-transitory computer readable medium storing a control program of a base station which performs radio communication with mobile stations, the program causing a computer to execute the steps of:
assigning an identical group identifier to the plurality of mobile stations;
specifying the group identifier to instruct release of a radio connection; and
performing processing of releasing the radio connection to the mobile stations having the group identifier that is specified.

Each function of the present invention is not limited to the case in which the functions are achieved with a hardware configuration, but it is also possible to achieve any desired processing by causing a central processing unit (CPU) to execute a computer program.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

This application is based upon and claims the benefit of priority from Japanese Patent Application No. 2010-236177, filed on October 21, 2010, the disclosure of which is incorporated herein in its entirety by reference.

### Industrial Applicability

The present invention is applicable to various mobile communication systems such as Long Term Evolution (LTE).

### Reference Signs List

- 201: MOBILE STATION
- 202: BASE STATION
- 203: MOBILE MANAGEMENT APPARATUS

## Claims

1. A radio communication system comprising mobile stations and a base station which performs radio communication with the mobile stations, the radio communication system comprising:
identifier assignment means for assigning an identical group identifier to the plurality of mobile stations;
release instruction means for specifying the group identifier to instruct release of a radio connection; and
release means for performing processing of releasing the radio connection for the mobile stations having the group identifier specified by the release instruction means.

2. The radio communication system according to Claim 1, wherein the identifier assignment means assigns the group identifier to the plurality of mobile stations every time an event that requires release of the radio connection occurs.

3. The radio communication system according to Claim 1, wherein the identifier assignment means assigns the group identifier to the plurality of mobile stations when receiving a node reset from a core network.

4. The radio communication system according to any one of Claims 1 to 3, wherein the identifier assignment means notifies the mobile stations of the group identifier by a downlink message for radio resource control.

5. The radio communication system according to any one of Claims 1 to 4, wherein the release instruction means specifies the group identifier when releasing the radio connection for all the plurality of mobile stations identified by the group identifier.

6. The radio communication system according to any one of Claims 1 to 5, wherein the mobile stations having the group identifier specified by the release instruction means notify the base station of an identifier of the mobile stations.

7. The radio communication system according to Claim 6, wherein the base station releases the radio connection for the mobile stations that have notified the identifier.

8. A method of controlling a radio communication system comprising mobile stations and a base station which performs radio communication with the mobile stations, the method comprising the steps of:
assigning an identical group identifier to the plurality of mobile stations;
specifying the group identifier to instruct release of a radio connection; and
performing processing of releasing the radio connection in the mobile stations having the group identifier that is specified.

9. A base station which performs radio communication with mobile stations, comprising:
identifier assignment means for assigning an identical group identifier to the plurality of mobile stations;
release instruction means for specifying the group identifier to instruct release of a radio connection; and
release means for performing processing of releasing the radio connection to the mobile stations having the group identifier specified by the release instruction means.

10. A method of controlling a base station which performs radio communication with mobile stations, the method comprising the steps of:
assigning an identical group identifier to the plurality of mobile stations;
specifying the group identifier to instruct release of a radio connection; and
performing processing of releasing the radio connection to the mobile stations having the group identifier that is specified.

11. A non-transitory computer readable medium storing a control program of a base station which performs radio communication with mobile stations, the program causing a computer to execute the steps of:
assigning an identical group identifier to the plurality of mobile stations;
specifying the group identifier to instruct release of a radio connection; and
performing processing of releasing the radio connection to the mobile stations having the group identifier that is specified.
